(19) Europäisches Patentamt
European Patent Office
Office européen des brevets

(11) **EP 3 692 341 B1**

(12) **FASCICULE DE BREVET EUROPEEN**

(45) Date de publication et mention
de la délivrance du brevet:
**25.08.2021 Bulletin 2021/34**

(21) Numéro de dépôt: **18773492.6**

(22) Date de dépôt: **28.09.2018**

(51) Int Cl.:
***G01D 5/22*** *(2006.01)*

(86) Numéro de dépôt international:
**PCT/EP2018/076543**

(87) Numéro de publication internationale:
**WO 2019/068592 (11.04.2019 Gazette 2019/15)**

(54) **PROCÉDÉ DE MESURE D'UN DÉPLACEMENT**

VERSCHIEBUNGSMESSVERFAHREN

DISPLACEMENT MEASURING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.10.2017 FR 1759193**

(43) Date de publication de la demande:
**12.08.2020 Bulletin 2020/33**

(73) Titulaire: **Safran Electronics & Defense
75015 Paris (FR)**

(72) Inventeurs:
• **DEVELLE, Olivier
75015 Paris (FR)**
• **MANCA, Jean-Luc
75015 Paris (FR)**

(74) Mandataire: **Lavaud, Thomas et al
Cabinet Boettcher
16, rue Médéric
75017 Paris (FR)**

(56) Documents cités:
**EP-A2- 2 833 100     FR-A1- 2 995 992
US-A- 4 904 921      US-A1- 2015 362 340**

**EP 3 692 341 B1**

## Description

L'invention concerne le domaine des procédés de mesure d'un déplacement, qui utilisent un capteur de déplacement inductif.

ARRIERE PLAN DE L'INVENTION

Les capteurs de déplacement inductifs, tels que les LVDTs (pour *Linear Variable Differential Transformer),* les RVDTs (pour *Rotary Variable Differential Transformer)* ou les résolveurs, sont utilisés dans de multiples applications de divers domaines industriels.

On trouve notamment de nombreux capteurs de déplacement inductifs dans les aéronefs modernes, dans lesquels les actionneurs électromécaniques remplacent progressivement les actionneurs purement mécaniques et les actionneurs hydrauliques.

Un tel capteur de déplacement inductif comporte classiquement un bobinage primaire, un premier bobinage secondaire et un deuxième bobinage secondaire. Une tension d'excitation est appliquée aux bornes du bobinage primaire. Une première tension de mesure est générée aux bornes du premier bobinage secondaire et une deuxième tension de mesure est générée aux bornes du deuxième bobinage secondaire.

Un circuit électrique de traitement acquiert alors la première tension de mesure et la deuxième tension de mesure, et estime un déplacement axial ou angulaire à partir de la première tension de mesure et de la deuxième tension de mesure.

Une démodulation synchrone est souvent mise en œuvre dans le circuit électrique de traitement pour estimer le déplacement. La démodulation synchrone consiste notamment à multiplier la première tension de mesure par la tension d'excitation en phase et par la tension d'excitation en quadrature de phase, et à multiplier la deuxième tension de mesure par la tension d'excitation en phase et par la tension d'excitation en quadrature de phase.

Le circuit électrique de traitement doit donc acquérir la tension d'excitation pour réaliser la démodulation synchrone.

Or, il est fréquent que la tension d'excitation ne soit pas générée par le circuit électrique de traitement, mais par un circuit électrique de génération distinct du circuit électrique de traitement et possiblement situé à une certaine distance du circuit électrique de traitement. Le circuit électrique de traitement peut par exemple être intégré dans un équipement situé dans la soute de l'aéronef, alors que le circuit électrique de génération peut par exemple être intégré dans un équipement déporté situé à proximité d'un actionneur.

Le circuit électrique de traitement et le circuit électrique de génération doivent donc être reliés par un câble qui transmet au circuit électrique de traitement la tension d'excitation.

Par ailleurs, EP2833100 divulgue un capteur de position de type LVDT, dans lequel les signaux de sortie des deux inductions secondaires sont multipliés entre eux et le signal produit en résultant est ensuite envoyé à un filtre passe-bas pour déduire la mesure de position.

De plus, US2015/362340 décrit un capteur de position inductif dans lequel un signal de corrélation croisé entre le signal d'excitation et le signal de sortie ainsi qu'un signal d'auto-corrélation du signal d'excitation sont utilisés pour la détermination de la position.

OBJET DE L'INVENTION

L'invention a pour objet de réduire la masse et d'augmenter la fiabilité d'un système comprenant un capteur de déplacement inductif et un circuit électrique de traitement.

RESUME DE L'INVENTION

En vue de la réalisation de ce but, on propose un procédé de mesure d'un déplacement comprenant les étapes de :

- acquérir et numériser une première tension de mesure aux bornes d'un premier enroulement secondaire et une deuxième tension de mesure aux bornes d'un deuxième enroulement secondaire d'un capteur de déplacement inductif ;
- multiplier la première tension de mesure par elle-même pour obtenir une première composante d'un vecteur croisé, multiplier la deuxième tension de mesure par elle-même pour obtenir une deuxième composante du vecteur croisé, multiplier la première tension de mesure et la deuxième tension de mesure entre elles pour obtenir une troisième composante du vecteur croisé ;
- appliquer le vecteur croisé en entrée d'un filtre passe-bas pour obtenir un vecteur filtré ;
- estimer le déplacement à partir des composantes du vecteur filtré.

Le procédé de mesure selon l'invention n'utilise donc pas, pour estimer le déplacement, une tension d'excitation appliquée aux bornes d'un bobinage primaire du capteur de déplacement inductif.

On supprime ainsi un câble utilisé traditionnellement pour transmettre la tension d'excitation, et on réduit donc la masse d'un système comprenant le capteur de déplacement inductif et un circuit électrique de traitement, tout en augmentant la fiabilité dudit système.

On propose aussi un circuit électrique de traitement destiné à être connecté à un capteur inductif de déplacement, le circuit électrique de traitement comprenant un composant de traitement agencé pour mettre en œuvre le procédé de mesure qui vient d'être décrit.

On propose en outre un système comprenant un circuit électrique de traitement tel que celui qui vient d'être décrit et un capteur inductif de déplacement.

D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux dessins annexés, parmi lesquels :

- la figure 1 représente un système comprenant un résolveur, un circuit électrique d'acquisition, un circuit électrique de traitement et un circuit électrique de génération, un procédé de mesure selon un premier mode de réalisation de l'invention étant mis en œuvre dans le circuit électrique de traitement ;
- la figure 2 représente un composant de traitement du circuit électrique de traitement ;
- la figure 3 représente une étape d'initialisation du procédé de mesure selon le premier mode de réalisation de l'invention ;
- la figure 4 représente des étapes du procédé de mesure selon le premier mode de réalisation de l'invention ;
- la figure 5 représente un composant de traitement d'un circuit électrique de traitement dans lequel est mis en œuvre un procédé de mesure selon un deuxième mode de réalisation de l'invention ;
- la figure 6 représente une étape d'initialisation du procédé de mesure selon le deuxième mode de réalisation de l'invention ;
- la figure 7 représente des étapes du procédé de mesure selon le deuxième mode de réalisation de l'invention.

DESCRIPTION DETAILLEE DE L'INVENTION

Le procédé de mesure selon un premier mode de réalisation de l'invention est destiné à mesurer une position angulaire d'un rotor d'un moteur électrique d'un actionneur électromécanique.

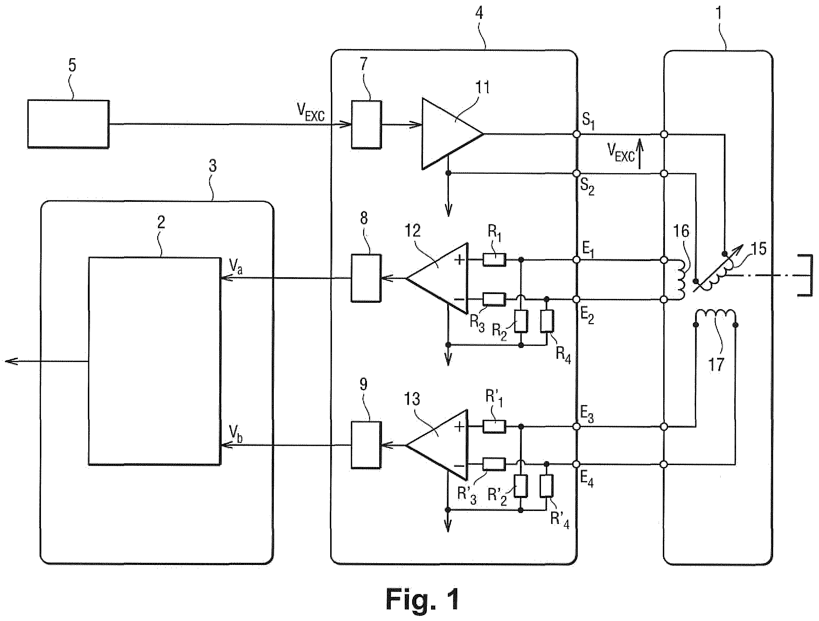

En référence à la figure 1, un résolveur 1 est intégré dans le moteur électrique. Le résolveur 1 comporte un stator et un rotor solidaire en rotation du rotor du moteur électrique.

On mesure un déplacement angulaire du rotor du résolveur 1 pour obtenir une estimation de la position angulaire du rotor du moteur électrique.

Le procédé de mesure est mis en œuvre dans un composant de traitement 2 d'un circuit électrique de traitement 3. Le circuit électrique de traitement 3 est monté sur une carte électrique intégrée dans un premier équipement électrique. Le premier équipement électrique est par exemple un calculateur, un concentrateur de données, une unité de contrôle, etc.

Le composant de traitement 2 est ici un FPGA, mais pourrait être un composant différent, par exemple un microcontrôleur, un processeur, un ASIC, etc.

Le circuit électrique de traitement 3 est connecté à un circuit électrique d'acquisition 4, qui est lui-même connecté au résolveur 1. Un circuit électrique de génération 5 est aussi connecté au circuit électrique d'acquisition 4. Le circuit électrique de génération 5 est monté sur une carte électrique intégrée dans un deuxième équipement électrique situé à une certaine distance du premier équipement électrique.

Le circuit électrique d'acquisition 4 comporte un convertisseur numérique analogique 7, un premier convertisseur analogique numérique 8, un deuxième convertisseur analogique numérique 9, un premier amplificateur 11, un deuxième amplificateur 12 et un troisième amplificateur 13.

Une sortie du circuit électrique de génération 5 est reliée à une entrée du convertisseur numérique analogique 7. Une sortie du convertisseur numérique analogique 7 est reliée à une entrée du premier amplificateur 11. Une sortie du premier amplificateur 11 est reliée à une sortie $S_1$ du circuit électrique d'acquisition 4, alors qu'une masse électrique est reliée à une sortie $S_2$ du circuit électrique d'acquisition 4.

Le deuxième amplificateur 12 est associé à quatre résistances $R_1$, $R_2$, $R_3$, $R_4$. La résistance $R_1$ est montée entre une entrée non inverseuse du deuxième amplificateur 12 et une entrée $E_1$ du circuit électrique d'acquisition 4. Une première borne de la résistance $R_2$ est connectée à une borne de la résistance $R_1$, et une deuxième borne de la résistance $R_2$ est connectée à la masse électrique. La résistance $R_3$ est montée entre une entrée inverseuse du deuxième amplificateur 12 et une entrée $E_2$ du circuit électrique d'acquisition 4. Une première borne de la résistance $R_4$ est connectée à une borne de la résistance $R_3$, et une deuxième borne de la résistance $R_4$ est connectée à la masse électrique.

Une sortie du deuxième amplificateur 12 est reliée à une entrée du premier convertisseur analogique numérique 8. Une sortie du premier convertisseur analogique numérique 8 est reliée au composant de traitement 2 du circuit électrique de traitement 3.

De même, le troisième amplificateur 13 est associé à quatre résistances $R'_1$, $R'_2$, $R'_3$, $R'_4$. Les quatre résistances $R'_1$, $R'_2$, $R'_3$, $R'_4$ sont montées entre le troisième amplificateur 13 et des entrées $E_3$ et $E_4$, et sont positionnées comme les résistances $R_1$, $R_2$, $R_3$ et $R_4$.

Une sortie du troisième amplificateur 13 est reliée à une entrée du deuxième convertisseur analogique numérique 9. Une sortie du deuxième convertisseur analogique numérique 9 est reliée au composant de traitement 2 du circuit électrique de traitement 3.

Les sorties $S_1$ et $S_2$ du circuit électrique d'acquisition 4 sont reliées chacune à une borne d'un enroulement primaire 15 du résolveur 1. Des bornes d'un premier enroulement secondaire 16 du résolveur 1 sont reliées aux entrées $E_1$ et $E_2$. Des bornes d'un deuxième enroulement secondaire 17 du résolveur 1 sont reliées aux entrées $E_3$ et $E_4$.

Lorsqu'il convient de mesurer la position angulaire du rotor du moteur électrique, le circuit électrique de génération 5 produit une tension d'excitation $V_{EXC}$ numérique, qui est transformée en une tension d'excitation $V_{EXC}$ analogique par le convertisseur numérique analogique 7 du circuit électrique d'acquisition 4. La tension d'excitation $V_{EXC}$ est appliquée aux bornes de l'enroulement primaire 15 du résolveur 1.

La tension d'excitation $V_{EXC}$ est telle que :

$$V_{EXC}=U_0.\sin(\omega t+\varphi),$$

où $U_0$, $\omega$ et $\varphi$ sont respectivement l'amplitude, la pulsation et la phase de la tension d'excitation $V_{EXC}$.

Une première tension de mesure $V_a$ aux bornes du premier enroulement secondaire 16 du résolveur 1 est alors acquise et numérisée par le deuxième amplificateur 12 et par le premier convertisseur analogique numérique 8. De même, une deuxième tension de mesure $V_b$ aux bornes du deuxième enroulement secondaire 17 du résolveur 1 est alors acquise et numérisée par le troisième amplificateur 13 et par le deuxième convertisseur analogique numérique 9.

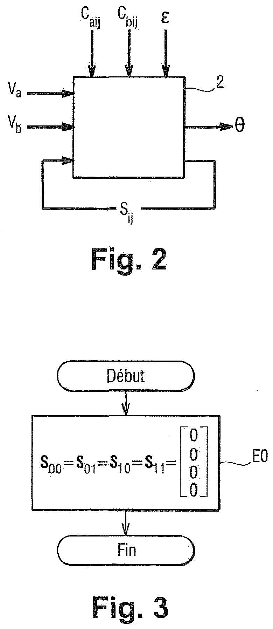

En référence à la figure 2, la première tension de mesure $V_a$ et la deuxième tension de mesure $V_b$ sont alors acquises par le composant de traitement 2 du circuit électrique de traitement 3.

La première tension de mesure $V_a$ peut théoriquement être estimée par la formule :

$$V_a=V_{EXC}.\sin(\theta),$$

où $\theta$ est le déplacement angulaire du rotor du résolveur 1.

La deuxième tension de mesure $V_b$ peut théoriquement être estimée par la formule :

$$V_b=V_{EXC}.\cos(\theta).$$

Le composant de traitement 2 acquiert aussi des coefficients AR $C_{aij}$ et des coefficients AM $C_{bij}$.

Les coefficients AR $C_{aij}$ comprennent des coefficients AR $C_{a00}$, $C_{a01}$ d'un premier filtre bi-quadratique, et des coefficients AR $C_{a10}$, $C_{a11}$ d'un deuxième filtre bi-quadratique.

Les coefficients AM $C_{bij}$ comprennent des coefficients AM $C_{b00}$, $C_{b01}$ et $C_{b02}$ d'un premier filtre bi-quadratique, et des coefficients AM $C_{b10}$, $C_{b11}$ et $C_{b12}$ d'un deuxième filtre bi-quadratique.

Le composant de traitement 2 acquiert de plus un seuil de zone morte $\varepsilon$.

La mise en œuvre du procédé de mesure utilise un premier vecteur d'état $S_{00}$ du premier filtre bi-quadratique, un deuxième vecteur d'état $S_{01}$ du premier filtre bi-quadratique, un premier vecteur d'état $S_{10}$ du deuxième filtre bi-quadratique, et un deuxième vecteur d'état $S_{11}$ du deuxième filtre bi-quadratique.

On note que, dans la présente demande, les vecteurs sont écrits « en gras ».

Les vecteurs $S_{00}$, $S_{01}$, $S_{10}$ et $S_{11}$ sont des vecteurs comportant chacun une colonne et quatre lignes.

En référence à la figure 3, le procédé de mesure comporte tout d'abord une étape d'initialisation E0, au cours de laquelle les vecteurs $S_{00}$, $S_{01}$, $S_{10}$ et $S_{11}$ sont initialisés à zéro :

$$\mathbf{S_{00}}=\mathbf{S_{01}}=\mathbf{S_{10}}=\mathbf{S_{11}}=\begin{bmatrix}0\\0\\0\\0\end{bmatrix}.$$

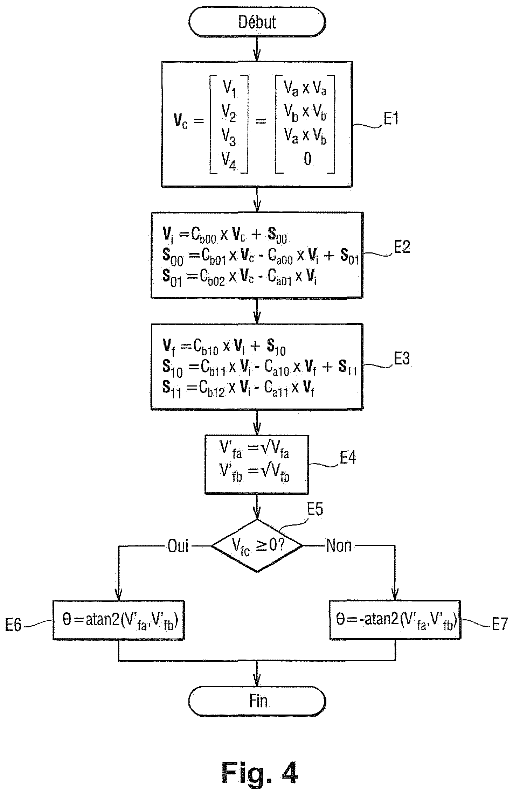

En référence à la figure 4, la première tension de mesure $V_a$ est alors multipliée par elle-même pour obtenir une première composante $V_1$ d'un vecteur croisé $V_c$. La deuxième tension de mesure $V_b$ est multipliée par elle-même pour obtenir une deuxième composante $V_2$ du vecteur croisé $V_c$. La première tension de mesure $V_a$ et la deuxième tension de mesure $V_b$ sont multipliées entre elles pour obtenir une troisième composante $V_3$ du vecteur croisé $V_c$. Une quatrième composante $V_4$ du vecteur croisé $V_c$ est mise à zéro (étape E1).

On a donc :

$$\mathbf{V_c}=\begin{bmatrix}V_1\\V_2\\V_3\\V_4\end{bmatrix}=\begin{bmatrix}V_A.V_A\\V_B.V_B\\V_A.V_B\\0\end{bmatrix}.$$

Le vecteur croisé $V_c$ est alors appliqué en entrée d'un filtre passe-bas.

Le filtre passe-bas permet de supprimer une composante en $2\omega$ du vecteur croisé $V_c$.

Le filtre passe-bas comporte le premier filtre bi-quadratique et le deuxième filtre bi-quadratique.

Le vecteur croisé $V_c$ est donc tout d'abord appliqué en entrée du premier filtre bi-quadratique (étape E2).

On obtient les équations suivantes :

$$\mathbf{V_i}=C_{b00}.\mathbf{V_c}+\mathbf{S_{00}}$$

$$\mathbf{S_{00}}=C_{b01}.\mathbf{V_c}-C_{a00}.\mathbf{V_i}+\mathbf{S_{01}}$$

$$\mathbf{S_{01}}=C_{b02}.\mathbf{V_c}-C_{a01}.\mathbf{V_i}$$

$V_i$ est un vecteur intermédiaire en sortie du premier filtre bi-quadratique.

Le vecteur intermédiaire $V_i$ est ensuite appliqué en entrée du deuxième filtre bi-quadratique (étape E3).

On obtient alors les équations suivantes :

$$V_f = C_{b10} \cdot V_i + S_{10}$$

$$S_{10} = C_{b11} \cdot V_i - C_{a10} \cdot V_f + S_{11}$$

$$S_{11} = C_{b12} \cdot V_i - C_{a11} \cdot V_f$$

$V_f$ est un vecteur filtré en sortie du deuxième filtre bi-quadratique.

Le déplacement angulaire $\theta$ du rotor du résolveur 1 est alors estimé à partir des composantes du vecteur filtré $V_f$.

Le procédé de mesure comporte ainsi l'étape de calculer $V'_{fa} = \sqrt{V_{fa}}$, où $V_{fa}$ est une première composante du vecteur filtré $V_f$, puis de calculer $V'_{fa} = \sqrt{V_{fa}}$, où $V_{fb}$ est une deuxième composante du vecteur filtré $V_f$ (étape E4).

Un signe de $V_{fc}$ est alors déterminé. $V_{fc}$ est une troisième composante du vecteur filtré $V_f$ (étape E5).

Si $V_{fc} \geq 0$, le déplacement angulaire $\theta$ est estimé en utilisant la formule $\theta = \text{atan2}(V'_{fa}, V'_{fb})$ : étape E6.

Si $V_{fc} < 0$, le déplacement angulaire $\theta$ est estimé en utilisant la formule $\theta = -\text{atan2}(V'_{fa}, V'_{fb})$ : étape E7.

On note que la fonction atan2(y, x) peut être définie ainsi :

atan2(y, x)=arctan(y/x) si x>0,

atan2(y, x)=n/2-arctan(x/y) si y>0,

atan2(y, x)=-n/2-arctan(x/y) si y<0,

atan2(y, x)=arctan(y/x)± π si x<0,

atan2(y, x) étant indéfinie si x=0 et y=0.

Le procédé de mesure s'achève alors.

La mise en œuvre du procédé de mesure ne nécessite donc pas que le circuit électrique de traitement 3 acquière la tension d'excitation $V_{EXC}$. Ainsi, il n'est pas nécessaire de relier par un câble dédié à la transmission de la tension d'excitation $V_{EXC}$ le premier équipement électrique (dans lequel se trouve le circuit électrique de traitement 3) et le deuxième équipement électrique (dans lequel se trouve le circuit électrique de génération 5).

On réduit ainsi la masse et la complexité du système qui vient d'être décrit, et on augmente la fiabilité dudit système.

On note que la précision de mesure obtenue est la même que lorsqu'une démodulation synchrone qui utilise la tension d'excitation $V_{EXC}$ est mise en œuvre. On précise cependant que la mesure effectuée sans excitation n'est valide que pour un angle $\theta$ compris dans le domaine $[-\pi/2 ; \pi/2]$. En dehors de cette plage de définition, il y a une ambiguïté de $\pi$ radians sur la mesure de l'angle $\theta$.

On décrit maintenant un procédé de mesure selon un deuxième mode de réalisation de l'invention. Le procédé de mesure selon le deuxième mode de réalisation de l'invention est cette fois destiné à mesurer une position angulaire d'un organe d'actionnement d'un actionneur électromécanique.

La mesure utilise un RVDT. On mesure un déplacement angulaire du rotor du RVDT pour obtenir une estimation de la position angulaire de l'organe d'actionnement de l'actionneur électromécanique.

L'architecture matérielle *(hardware)* du système qui réalise la mesure est semblable à celle du système qui vient d'être décrit.

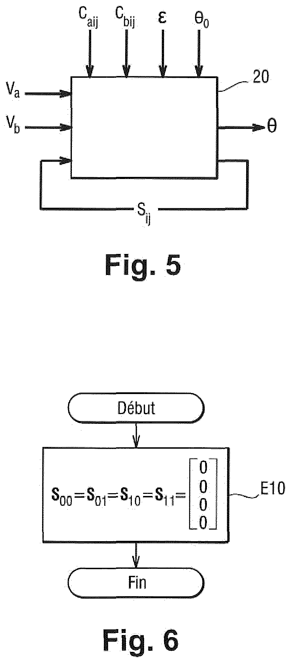

En référence à la figure 5, la première tension de mesure $V_a$ et la deuxième tension de mesure $V_b$ sont acquises par le composant de traitement 20 du circuit électrique de traitement.

Le composant de traitement 20 acquiert aussi des coefficients AR $C_{aij}$ et des coefficients AM $C_{bij}$.

Les coefficients AR $C_{aij}$ comprennent des coefficients AR $C_{a00}$, $C_{a01}$ d'un premier filtre bi-quadratique, et des coefficients AR $C_{a10}$, $C_{a11}$ d'un deuxième filtre bi-quadratique.

Les coefficients AM $C_{bij}$ comprennent des coefficients AM $C_{b00}$, $C_{b01}$, $C_{b02}$ et $C_{b03}$ d'un premier filtre bi-quadratique, et des coefficients AM $C_{b10}$, $C_{b11}$, $C_{b12}$ et $C_{b13}$ d'un deuxième filtre bi-quadratique.

Le composant de traitement 20 acquiert de plus un seuil de zone morte $\varepsilon$.

Le composant de traitement 20 acquiert en outre un déplacement angulaire maximal $\theta_0$.

En référence à la figure 6, le procédé de mesure comporte tout d'abord une étape d'initialisation E10, au cours de laquelle les vecteurs $S_{00}$, $S_{01}$, $S_{10}$ et $S_{11}$ sont initialisés à zéro :

$$S_{00} = S_{01} = S_{10} = S_{11} = \begin{bmatrix} 0 \\ 0 \\ 0 \\ 0 \end{bmatrix}.$$

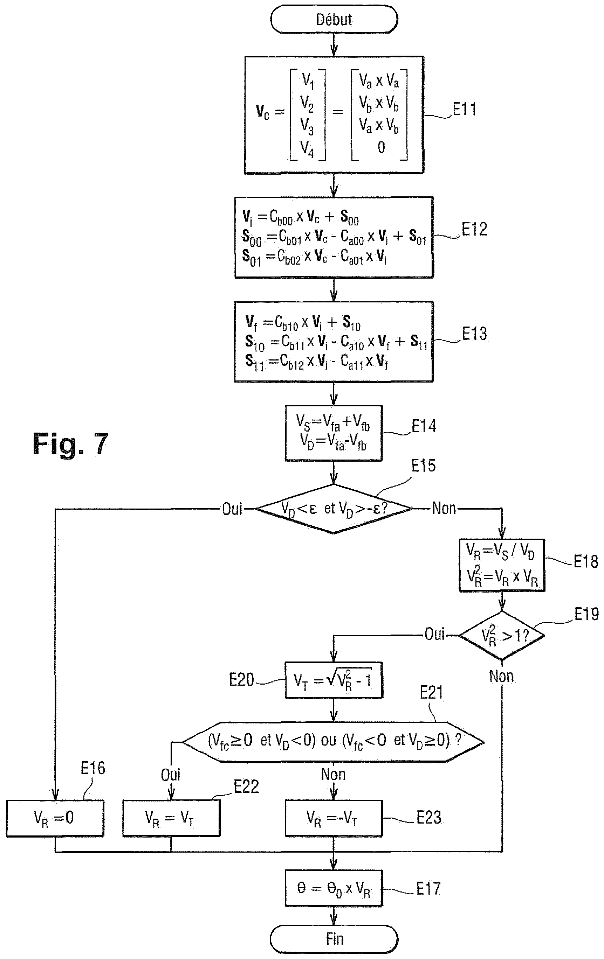

En référence à la figure 7, la première tension de mesure $V_a$ est alors multipliée par elle-même pour obtenir une première composante $V_1$ d'un vecteur croisé $V_c$. La deuxième tension de mesure $V_b$ est multipliée par elle-même pour obtenir une deuxième composante $V_2$ du vecteur croisé $V_c$. La première tension de mesure $V_a$ et la deuxième tension de mesure $V_b$ sont multipliées entre elles pour obtenir une troisième composante $V_3$ du vecteur croisé $\mathbf{V_c}$. Une quatrième composante $V_4$ du vecteur croisée $\mathbf{V_c}$ est mise à zéro (étape E11).

On a donc :

$$\mathbf{V_c} = \begin{bmatrix} V_1 \\ V_2 \\ V_3 \\ V_4 \end{bmatrix} = \begin{bmatrix} V_A . V_A \\ V_B . V_B \\ V_A . V_B \\ 0 \end{bmatrix} .$$

Le vecteur croisé $\mathbf{V_c}$ est alors appliqué en entrée d'un filtre passe-bas comportant le premier filtre bi-quadratique et le deuxième filtre bi-quadratique.

Le vecteur croisé $\mathbf{V_c}$ est tout d'abord appliqué en entrée du premier filtre bi-quadratique (étape E12).

On obtient donc les équations suivantes :

$$\mathbf{V_i} = C_{b00} . \mathbf{V_c} + \mathbf{S_{00}}$$

$$\mathbf{S_{00}} = C_{b01} . \mathbf{V_c} - C_{a00} . \mathbf{V_i} + \mathbf{S_{01}}$$

$$\mathbf{S_{01}} = C_{b02} . \mathbf{V_c} - C_{a01} . \mathbf{V_i}$$

$\mathbf{V_i}$ est un vecteur intermédiaire en sortie du premier filtre bi-quadratique.

Le vecteur intermédiaire $V_i$ est ensuite appliqué en entrée du deuxième filtre bi-quadratique (étape E13).

On obtient alors les équations suivantes :

$$\mathbf{V_f} = C_{b10} . \mathbf{V_i} + \mathbf{S_{10}}$$

$$\mathbf{S_{10}} = C_{b11} . \mathbf{V_i} - C_{a10} . \mathbf{V_f} + \mathbf{S_{11}}$$

$$\mathbf{S_{11}} = C_{b12} . \mathbf{V_i} - C_{a11} . \mathbf{V_f}$$

$\mathbf{V_f}$ est un vecteur filtré en sortie du deuxième filtre bi-quadratique.

Le déplacement angulaire $\theta$ du rotor du RVDT est alors estimé à partir des composantes du vecteur filtré.

Le procédé de mesure comporte ainsi l'étape de calculer $V_S = V_{fa} + V_{fb}$ et $V_D = V_{fa} - V_{fb}$, où $V_{fa}$ est une première composante du vecteur filtré $\mathbf{V_f}$ et $V_{fb}$ est une deuxième composante du vecteur filtré $V_f$ (étape E14).

Si $V_D < \varepsilon$ et $V_D > -\varepsilon$ (étape E15), alors le procédé de mesure comporte l'étape de poser :

$V_R = 0$ (étape E16).

Le déplacement angulaire $\theta$ est alors estimé en utilisant la formule $\theta = \theta_0 . V_R$ (étape E17).

Sinon, le procédé de mesure comporte l'étape de calculer :

$V_R = V_S / V_D$ et $V_R^2 = V_R . V_R$ (étape E18).

Puis, $V_R^2$ est comparé avec 1 (étape E19).

Si $V_R^2 \leq 1$, le déplacement angulaire $\theta$ est estimé en utilisant la formule $\theta = \theta_0 . V_R$ (étape E17).

Si $V_R^2 > 1$, le procédé de mesure comporte l'étape de calculer :

$$V_T = \sqrt{V_R^2 - 1}$$

(étape E20).

Dans ce cas, si :

$V_{fc} \geq 0$ et $V_D < 0$, ou si $V_{fc} < 0$ et $V_D \geq 0$ (étape E21),

le procédé de mesure comporte l'étape de poser : $V_R = V_T$ (étape E22). $V_{fc}$ est une troisième composante du vecteur filtré $\mathbf{V_f}$.

Sinon, le procédé de mesure comporte l'étape de poser :

$V_R = -V_T$ (étape E23).

Le déplacement angulaire $\theta$ est alors estimé en utilisant la formule $\theta = \theta_0 . V_R$ (étape E17).

Le procédé de mesure s'achève alors.

On note ici que le procédé de mesure selon le deuxième mode de réalisation de l'invention peut aussi être mis en oeuvre avec un LVDT, qui mesure un déplacement linéaire X.

On remplacera alors, dans ce qui précède, le déplacement angulaire $\theta$ par le déplacement linéaire X et le déplacement angulaire maximal $\theta_0$ par un déplacement linéaire maximal $X_0$.

On généralise donc le procédé de mesure en utilisant un déplacement d et un déplacement maximal $d_0$ : d est un déplacement angulaire ou un déplacement linéaire, et $d_0$ est un déplacement angulaire maximal ou un déplacement linéaire maximal.

Bien entendu, l'invention n'est pas limitée aux modes de réalisation décrits mais englobe toute variante entrant dans le champ de l'invention telle que définie par les revendications.

On a indiqué ici que le premier équipement électrique et le deuxième équipement électrique ne sont pas reliés par un câble permettant de transmettre la tension d'excitation $V_{EXC}$. La tension d'excitation $V_{EXC}$ n'est en effet pas requise par le procédé de mesure selon l'invention.

On note qu'il est cependant parfaitement possible de relier le premier équipement électrique et le deuxième équipement électrique par un tel câble. On peut alors par exemple prévoir, en fonctionnement nominal, de réaliser les mesures en effectuant une démodulation synchrone traditionnelle qui utilise la tension d'excitation. Le procédé de mesure selon l'invention est alors utilisé lorsque la tension d'excitation n'est plus disponible, par exemple en cas de rupture du câble.

**Revendications**

1. Procédé de mesure d'un déplacement comprenant les étapes de :

   - acquérir et numériser une première tension de mesure ($V_a$) aux bornes d'un premier enroulement secondaire (16) et une deuxième tension de mesure ($V_b$) aux bornes d'un deuxième enroulement secondaire (17) d'un capteur de déplacement inductif (1) ;
   - multiplier la première tension de mesure par elle-même pour obtenir une première composante ($V_1$) d'un vecteur croisé **($V_c$)**, multiplier la deuxième tension de mesure par elle-même pour obtenir une deuxième composante ($V_2$) du vecteur croisé **($V_c$)**, multiplier la première tension de mesure et la deuxième tension de mesure entre elles pour obtenir une troisième composante ($V_3$) du vecteur croisé **($V_c$)** ;
   - appliquer le vecteur croisé en entrée d'un filtre passe-bas pour obtenir un vecteur filtré **($V_f$)** ;
   - estimer le déplacement à partir des composantes du vecteur filtré **($V_f$)** .

2. Procédé de mesure selon la revendication 1, dans lequel le filtre passe-bas comporte un premier filtre bi-quadratique et un deuxième filtre bi-quadratique.

3. Procédé de mesure selon la revendication 1, dans lequel le capteur de déplacement inductif est un résolveur (1) et dans lequel le déplacement est un déplacement angulaire ($\theta$), le procédé de mesure comprenant en outre les étapes de :

   - calculer $V'_{fa}=\sqrt{V_{fa}}$, où $V_{fa}$ est une première composante du vecteur filtré **($V_f$)** ;
   - calculer $V'_{fb}=\sqrt{V_{fb}}$, où $V_{fb}$ est une deuxième composante du vecteur filtré **($V_f$)** ;
   - déterminer un signe de $V_{fc}$, où $V_{fc}$ est une troisième composante du vecteur filtré **($V_f$)** ;
   - si $V_{fc} \geq 0$, estimer le déplacement angulaire $\theta$ en utilisant la formule $\theta = \text{atan2}(V'_{fa}, V'_{fb})$ ;
   - si $V_{fc} < 0$, estimer le déplacement angulaire $\theta$ en utilisant la formule $\theta = -\text{atan2}(V'_{fa}, V'_{fb})$.

4. Procédé de mesure selon la revendication 1, dans lequel le capteur de déplacement inductif est un LVDT ou un RVDT, le déplacement étant un déplacement linéaire ou un déplacement angulaire, le procédé de mesure comprenant en outre les étapes de :

   - calculer $V_s = V_{fa} + V_{fb}$, où $V_{fa}$ est une première composante du vecteur filtré **($V_f$)** et $V_{fb}$ est une deuxième composante du vecteur filtré **($V_f$)** ;
   - calculer $V_D = V_{fa} - V_{fb}$ ;
   - si $V_D < \varepsilon$ et $V_D > -\varepsilon$, poser $V_R = 0$, et estimer le déplacement d en utilisant la formule $d = d_0.V_R$, où d0 est un déplacement maximal ;
   - sinon, calculer $V_R = V_S/V_D$ et $V_R^2$ ;
   - estimer le déplacement d à partir de $V_R^2$.

5. Procédé de mesure selon la revendication 4, comprenant en outre les étapes de :

   - comparer $V_R^2$ avec 1 ;
   - si $V_R^2 \leq 1$, estimer le déplacement d en utilisant la formule $d = d_0.V_R$ ;
   - si $V_R^2 > 1$, calculer $V_T = \sqrt{V_R^2 - 1}$ ;
   - si $V_{fc} \geq 0$ et $V_D < 0$, ou si $V_{fc} < 0$ et $V_D \geq 0$, $V_{fc}$ étant une troisième composante du vecteur filtré **($V_f$)**, poser $V_R = V_T$, et estimer le déplacement d en utilisant la formule $d = d_0.V_R$ ;
   - sinon, poser $V_R = -V_T$, et estimer le déplacement d en utilisant la formule $d = d_0.V_R$

6. Circuit électrique de traitement (3) destiné à être connecté à un capteur inductif de déplacement (1), le circuit électrique de traitement comprenant un composant de traitement (2) agencé pour mettre en œuvre le procédé de mesure selon l'une des revendications précédentes.

7. Système comprenant un circuit électrique de traitement (3) selon la revendication 6 et un capteur inductif de déplacement (1).

**Patentansprüche**

1. Verschiebungsmessverfahren, umfassend die Schritte:

   - Erfassen und Digitalisieren einer ersten Messspannung ($V_a$) an den Klemmen einer ersten sekundären Wicklung (16) und einer zweiten Messspannung ($V_b$) an den Klemmen einer zweiten sekundären Wicklung (17) eines induktiven Verschiebungssensors (1);
   - Multiplizieren der ersten Messspannung mit sich selbst, um eine erste Komponente ($V_1$) eines Kreuzvektors **($v_c$)** zu erhalten, Multiplizieren der zweiten Messspannung mit sich selbst, um eine zweite Komponente ($V_2$) des Kreuzvektors **($v_c$)** zu erhalten, Multiplizieren der ersten Messspannung und der zweiten Messspannung miteinander, um eine dritte Komponente ($V_3$) des Kreuzvektors **($v_c$)** zu erhalten;
   - Anlegen des Kreuzvektors am Eingang eines Tiefpassfilters, um einen gefilterten Vektor **($v_f$)**

zu erhalten;
- Schätzen der Verschiebung anhand der Komponenten des gefilterten Vektors **(v$_f$)**.

**2.** Messverfahren nach Anspruch 1, bei dem das Tiefpassfilter ein erstes biquadratisches Filter und ein zweites biquadratisches Filter umfasst.

**3.** Messverfahren nach Anspruch 1, bei dem der induktive Verschiebungssensor ein Resolver (1) ist und bei dem die Verschiebung eine Winkelverschiebung (θ) ist, wobei das Messverfahren ferner die Schritte umfasst:

- Berechnen von $V'_{fa}=\sqrt{V_{fa}}$ , wobei V$_{fa}$ eine erste Komponente des gefilterten Vektors **(v$_f$)** ist;

- Berechnen von $V'_{fb}=\sqrt{V_{fb}}$ , wobei V$_{fb}$ eine zweite Komponente des gefilterten Vektors **(v$_f$)** ist;

- Bestimmen eines Vorzeichens von V$_{fc}$, wobei V$_{fc}$ eine dritte Komponente des gefilterten Vektors **(v$_f$)** ist;
- wenn V$_{fc}$≥0, Schätzen der Winkelverschiebung θ, indem die Formel θ=atan2(V'$_{fa}$, V'$_{fb}$) verwendet wird;
- wenn V$_{fc}$<0, Schätzen der Winkelverschiebung θ, indem die Formel θ=-atan2(V'$_{fa}$, V'$_{fb}$) verwendet wird.

**4.** Messverfahren nach Anspruch 1, bei dem der induktive Verschiebungssensor ein LVDT oder ein RVDT ist, wobei die Verschiebung eine lineare Verschiebung oder eine Winkelverschiebung ist, wobei das Messverfahren ferner die Schritte umfasst:

- Berechnen von V$_s$=V$_{fa}$+V$_{fb}$, wobei V$_{fa}$ eine erste Komponente des gefilterten Vektors **(v$_f$)** und V$_{fb}$ eine zweite Komponente des gefilterten Vektors **(v$_f$)** ist;
- Berechnen von V$_D$=V$_{fa}$-V$_{fb}$;
- wenn V$_D$<ε und V$_D$>-ε, Festsetzen, dass V$_R$=0, und Schätzen der Verschiebung d, indem die Formel d=d0·V$_R$ verwendet wird, wobei d0 eine maximale Verschiebung ist;
- andernfalls, Berechnen von V$_R$=V$_S$/V$_D$ und V$_R$²;
- Schätzen der Verschiebung d anhand von V$_R$².

**5.** Messverfahren nach Anspruch 4, ferner umfassend die Schritte:

- Vergleichen von V$_R$² mit 1;
- wenn V$_R$² ≤1, Schätzen der Verschiebung d, indem die Formel d=d0·V$_R$ verwendet wird;

- wenn V$_R$²>1, Berechnen von

$$V_T=\sqrt{V_R^2 - 1};$$

- wenn V$_{fc}$≥0 und V$_D$<0, oder wenn V$_{fc}$<0 und V$_D$≥0, wobei V$_{fc}$ eine dritte Komponente des gefilterten Vektors **(v$_f$)** ist, Festsetzen, dass V$_R$=V$_T$, und Schätzen der Verschiebung d, indem die Formel d=d$_0$·V$_R$ verwendet wird;
- andernfalls Festsetzen, dass V$_R$=-V$_T$ und Schätzen der Verschiebung d, indem die Formel d=d0·V$_R$ verwendet wird.

**6.** Elektrische Verarbeitungsschaltung (3), die dazu bestimmt ist, mit einem induktiven Verschiebungssensor (1) verbunden zu werden, wobei die elektrische Verarbeitungsschaltung eine Verarbeitungskomponente (2) umfasst, die ausgebildet ist, um das Messverfahren nach einem der vorhergehenden Ansprüche durchzuführen.

**7.** System, umfassend eine elektrische Verarbeitungsschaltung (3) nach Anspruch 6 und einen induktiven Verschiebungssensor (1).

**Claims**

**1.** A method of measuring a movement, the method comprising the steps of:

■ acquiring and digitizing both a first measurement voltage (V$_a$) across the terminals of a first secondary winding (16) and also a second measurement voltage (V$_b$) across the terminals of a second secondary winding (17) of an inductive movement sensor (1);
■ multiplying the first measurement voltage by itself in order to obtain a first component (V$_1$) of a crossed vector (**V$_c$**), multiplying the second measurement voltage by itself in order to obtain a second component (V$_2$) of the crossed vector (**V$_c$**), and multiplying together the first measurement voltage and the second measurement voltage in order to obtain a third component (V$_3$) of the crossed vector (**V$_c$**);
■ applying the crossed vector as input to a lowpass filter in order to obtain a filtered vector **(V$_f$)**; and
■ estimating the movement from the components of the filtered vector **(V$_f$).**

**2.** A measurement method according to claim 1, wherein the lowpass filter includes a first biquadratic filter and a second biquadratic filter.

**3.** A measurement method according to claim 1, wherein the inductive movement sensor is a resolver (1) and wherein the movement is an angular movement ($\theta$), the measurement method further comprising the steps of:

- calculating $V'_{fa} = \sqrt{V_{fa}}$, where $V_{fa}$ is a first component of the filtered vector $(\mathbf{V_f})$;

- calculating $V'_{fb} = \sqrt{V_{fb}}$, where $V_{fb}$ is a second component of the filtered vector $(\mathbf{V_f})$;
- determining the sign of $V_{fc}$, where $V_{fc}$ is a third component of the filtered vector $(\mathbf{V_f})$; and
- if $V_{fc} \geq 0$, estimating the angular movement $\theta$ by using the formula $\theta = \text{atan2}(V'f_a, V'f_b)$; or
- if $V_{fc} < 0$, estimating the angular movement $\theta$ by using the formula $\theta = -\text{atan2}(V'_{fa}, V'_{fb})$.

4. A measurement method according to claim 1, wherein the inductive movement sensor is an LVDT or an RVDT, the movement being a linear movement or an angular movement, the measurement method further comprising the steps of:

- calculating $V_s = V_{fa} + V_{fb}$, where $V_{fa}$ is a first component of the filtered vector $(\mathbf{V_f})$ and $V_{fb}$ is a second component of the filtered vector $(\mathbf{V_f})$;
- calculating $V_D = V_{fa} - V_{fb}$;
- if $V_D < \varepsilon$ and $V_D > -\varepsilon$, setting $V_R = 0$, and estimating the movement d by using the formula $d = d_0 . V_R$, where $d_0$ is a maximum movement;
· or else calculating $V_R = V_S/V_D$ and $V_R^2$; and
- estimating the movement d from $V_R^2$.

5. A measurement method according to claim 4, further comprising the steps of:

. comparing $V_R^2$ with 1;
. if $V_R^2 \leq 1$, estimating the movement d by using the formula $d = d_0 . V_R$;

. if $V_R^2 > 1$, calculating $V_T = \sqrt{V_R^2 - 1}$;

. if $V_{fc} \geq 0$ and $V_D < 0$, or if $V_{fc} < 0$ and $V_D \geq 0$, $V_{fc}$ being a first component of the filtered vector $(\mathbf{V_f})$, setting $V_R = V_T$, and estimating the movement d by using the formula $d = d_0 . V_R$;
. or else setting $V_R = -V_T$, and estimating the movement d by using the formula $d = d_0 . V_R$

6. An electrical processor circuit (3) for connection to an inductive movement sensor (1), the electrical processor circuit comprising a processor component (2) arranged to perform the measurement method according to any preceding claim.

7. A system comprising an electrical processor circuit (3) according to claim 6 and an inductive movement sensor (1).

Fig. 1

$$C_{aij} \quad C_{bij} \quad \varepsilon$$

$V_a \longrightarrow$

$V_b \longrightarrow$

2

$\longrightarrow \theta$

$S_{ij}$

# Fig. 2

Début

$$S_{00} = S_{01} = S_{10} = S_{11} = \begin{bmatrix} 0 \\ 0 \\ 0 \\ 0 \end{bmatrix}$$

E0

Fin

# Fig. 3

Début

$$\mathbf{V_c} = \begin{bmatrix} V_1 \\ V_2 \\ V_3 \\ V_4 \end{bmatrix} = \begin{bmatrix} V_a \times V_a \\ V_b \times V_b \\ V_a \times V_b \\ 0 \end{bmatrix}$$ E1

$\mathbf{V_i} = C_{b00} \times \mathbf{V_c} + \mathbf{S_{00}}$
$\mathbf{S_{00}} = C_{b01} \times \mathbf{V_c} - C_{a00} \times \mathbf{V_i} + \mathbf{S_{01}}$
$\mathbf{S_{01}} = C_{b02} \times \mathbf{V_c} - C_{a01} \times \mathbf{V_i}$ E2

$\mathbf{V_f} = C_{b10} \times \mathbf{V_i} + \mathbf{S_{10}}$
$\mathbf{S_{10}} = C_{b11} \times \mathbf{V_i} - C_{a10} \times \mathbf{V_f} + \mathbf{S_{11}}$
$\mathbf{S_{11}} = C_{b12} \times \mathbf{V_i} - C_{a11} \times \mathbf{V_f}$ E3

$V'_{fa} = \sqrt{V_{fa}}$
$V'_{fb} = \sqrt{V_{fb}}$ E4

E5
$V_{fc} \geq 0$?

Oui — Non

E6 — $\theta = \text{atan2}(V'_{fa}, V'_{fb})$

$\theta = -\text{atan2}(V'_{fa}, V'_{fb})$ — E7

Fin

**Fig. 4**

**Fig. 5**

**Fig. 6**

Fig. 7

Début

$$\mathbf{V}_c = \begin{bmatrix} V_1 \\ V_2 \\ V_3 \\ V_4 \end{bmatrix} = \begin{bmatrix} V_a \times V_a \\ V_b \times V_b \\ V_a \times V_b \\ 0 \end{bmatrix}$$    E11

$\mathbf{V}_i = C_{b00} \times \mathbf{V}_c + \mathbf{S}_{00}$
$\mathbf{S}_{00} = C_{b01} \times \mathbf{V}_c - C_{a00} \times \mathbf{V}_i + \mathbf{S}_{01}$
$\mathbf{S}_{01} = C_{b02} \times \mathbf{V}_c - C_{a01} \times \mathbf{V}_i$    E12

$\mathbf{V}_f = C_{b10} \times \mathbf{V}_i + \mathbf{S}_{10}$
$\mathbf{S}_{10} = C_{b11} \times \mathbf{V}_i - C_{a10} \times \mathbf{V}_f + \mathbf{S}_{11}$
$\mathbf{S}_{11} = C_{b12} \times \mathbf{V}_i - C_{a11} \times \mathbf{V}_f$    E13

$V_S = V_{fa} + V_{fb}$
$V_D = V_{fa} - V_{fb}$    E14

E15
$V_D < \varepsilon$ et $V_D > -\varepsilon$?    Oui — Non

$V_R = V_S / V_D$
$V_R^2 = V_R \times V_R$    E18

E19
$V_R^2 > 1$?    Oui — Non

E20    $V_T = \sqrt{V_R^2 - 1}$

E21
$(V_{fc} \geq 0$ et $V_D < 0)$ ou $(V_{fc} < 0$ et $V_D \geq 0)$ ?    Oui — Non

E16
$V_R = 0$

E22
$V_R = V_T$

$V_R = -V_T$    E23

$\theta = \theta_0 \times V_R$    E17

Fin

**EP 3 692 341 B1**

## RÉFÉRENCES CITÉES DANS LA DESCRIPTION

**Documents brevets cités dans la description**

- EP 2833100 A

- US 2015362340 A